Europäisches Patentamt

European Patent Office

Office européen des brevets

(19)

(11) Veröffentlichungsnummer: **0 001 658**
**B1**

(12) # EUROPÄISCHE PATENTSCHRIFT

(45) Veröffentlichungstag der Patentschrift:
**30.12.81**

(51) Int. Cl.³: **C 03 C 17/32, B 65 D 23/08**

(21) Anmeldenummer: **78200233.1**

(22) Anmeldetag: **09.10.78**

(54) **Verfahren zum Beschichten von Glasoberflächen.**

(30) Priorität: **13.10.77 DE 2746017**

(43) Veröffentlichungstag der Anmeldung:
**02.05.79 Patentblatt 79/9**

(45) Bekanntmachung des Hinweises auf die Patenterteilung:
**30.12.81 Patentblatt 81/52**

(84) Benannte Vertragsstaaten:
**BE CH DE FR GB LU NL**

(56) Entgegenhaltungen:
**DE-A-2 364 157**
**FR-A-1 426 058**
**US-A-4 035 548**

(73) Patentinhaber: **CHEMISCHE WERKE HÜLS AG,
Postfach 1320, D-4370 Marl 1 (DE)**

(72) Erfinder: **Gras, Rainer, Dr., An der Ziegelei 91,
D-4690 Herne 2 (DE)**

(74) Vertreter: **Stell, Hanna, Dipl.-Chem., RSP
PATENTE-PB 40 Holsterhauser
Strasse 160 Postfach 2840, D-4690 Herne 2 (DE)**

Verfahren zum Beschichten von Glasoberflächen

## Beschreibung und Beispiele

Das Überziehen von Glasoberflächen, insbesondere Glasfaschen mit einer festhaftenden, einheitlichen und transparenten Kunststoffschicht verleiht Flaschen beim Einsatz für kohlensäurehaltige Getränke, wie Bier, Cola-Getränke, Mineralwasser, Fruchtsaftgetränke usw. eine ausserordentliche Sicherheit und verlängert bei Mehrwegflaschen die Gebrauchsdauer. Infolge Schlag- und Stosseinwirkung, aber auch durch Erhitzen im Sonnenlicht oder an anderen Wärmequellen, ist es nämlich in der Vergangenheit häufig zu Explosionen ungeschützter Flaschen gekommen, die verschiedentlich schwere körperliche Verletzungen, insbesondere Augenverletzungen, bei Menschen hervorgerufen haben.

Einige der bisher bekannten Beschichtungen für diesen Zweck besitzen den Nachteil, dass sich die Überzugsschicht bei wiederholter Reinigung eintrübt, was bei thermoplastischen Materialien möglicherweise auf einen Nachkristallisationseffekt des Kunststoffes zurückzuführen sein könnte. Derartige Flaschen vermitteln optisch auch einen negativen Eindruck und sind daher verkaufspsychologisch unerwünscht. Der Nachteil von duroplastischen, äthergruppenenthaltenden Kunststoffüberzügen liegt in der ziemlich schlechten Einreissfestigkeit und in der oxidativen Anfälligkeit begründet, was zum Verspröden der Schutzschicht führt und somit, insbesondere bei Mehrwegflaschen, nach einiger Zeit den Splitterschutz nicht mehr gewährleistet.

Es ist bereits lange bekannt Glasflaschen z.B. Glasflakons, die man beschichten will, vor der eigentlichen Beschichtung mit einer Lösung von Silanen zu behandeln, da diese als Haftvermittler zwischen Glasfläche und Beschichtung dienen. Verwiesen wird hierzu auf FR-A Nr. 1426058, wobei dort zur Beschichtung eine Mischung aus nichtveresterten Epoxyharzen und Polymeren Methylacrylat eingesetzt wird.

Desweiteren ist es gemäss DE-A Nr. 2364157 bekannt, Glasflaschen mittels Polyurethanen in einem Einkomponentenverfahren zu beschichten, wobei die Isocyanatkomponente in blockierter Form eingesetzt wird. Als Hydroxyl- bzw. Aminkomponente werden lediglich Guanamine oder Bisphenol-A, — beide bisfunktionell — oder Melamin verwendet.

Melamin ist zwar trifunktionell, sein Zusatz führt aber wegen Sublimation zu Umweltverschmutzungen, sowie zur Eintrübung.

Schliesslich ist gemäss US-A Nr. 4035548 auch eine PUR-Beschichtung zwischen zwei Glasflächen bekannt, die allerdings naturgemäss keine Waschbeständigtkeit aufweisen muss, d.h. die Beanspruchung ist gering. Es werden nur lineare bifunktionelle Verbindungen als Hydroxylkomponente eingesetzt.

Es wurde nun gefunden, dass man Glasoberflächen auch ohne die eingangs geschilderten Nachteile beschichten kann, wenn man das Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 $\mu$m durch Auftragen von Massen aus Polyisocyanaten und hydroxylgruppenhaltigen Verbindungen sowie üblicher Verarbeitungszusätze und Aushärten des Überzuges bei erhöhten Temperaturen, so ausführt, dass man zunächst die reine Glasoberfläche mit einer wässrigen oder alkoholischen Silanschlichte behandelt, trocknet und anschliessend die so behandelte Glasoberfläche mit einer Masse aus

a) aliphatischen und/oder cycloaliphatischen Diisocyanaten oder deren Umsetzungsprodukte mit Wasser im Molverhältnis von 2: $\leqq$ 1 und einem Gemisch hydroxylgruppenhaltiger Verbindungen bestehend aus 40-80 Gew.%, vorzugsweise 50-75 Gew.%, trifunktioneller, hydroxylgruppenhaltiger Polyesterpolyole aus aliphatischen und/oder cycloaliphatischen Dicarbonsäuren bzw. Tricarbonsäuren und einem Gemisch aus Triolen und Diolen mit einem mittleren Molekulargewicht von 300 bis 1400; 15-50 Gew.%, vorzugsweise 20-40 Gew.%, bifunktioneller, hydroxylgruppenhaltiger Polyesterpolyole aus aliphatischen und/oder cycloaliphatischen Dicarbonsäuren und Diolen mit einem mittleren Molekulargewicht von 400 bis 2000, und gegebenenfalls 2,5-25 Gew.%, vorzugsweise 5-15 Gew.% aliphatischer und/oder cycloaliphatischer Diole, oder aus

b) einem Präpolymer aus aliphatischen und/oder cycloaliphatischen Diisocyanaten und 2,5-25 Gew.%, vorzugsweise 5-15 Gew.%, niedermolekularen aliphatischen Diolen und einem Gemisch hydroxylgruppenhaltiger Polyesterpolyole bestehend aus 40-80 Gew.%, vorzugsweise 50-75 Gew.%, trifunktioneller, hydroxylgruppenhaltiger Polyesterpolyole aus aliphatischen und/oder cycloaliphatischen Dicarbonsäuren bzw. Tricarbonsäuren und einem Gemisch aus Triolen und Diolen mit einem mittleren Molekulargewicht von 300 bis 1400; 15-50 Gew.%, vorzugsweise 20-40 Gew.%, bifunktioneller, hydroxylgruppenhaltiger Polyesterpolyole aus aliphatischen und/oder cycloaliphatischen Dicarbonsäuren und Diolen mit einem mittleren Molekulargewicht von 400 bis 2000, beschichtet und härtet, gegebenenfalls unter weiterer Wärmezufuhr, wobei die Prozentsätze jeweils bezogen sind auf die Gesamtmenge der Polyole.

Die auf diese Weise applizierte Kunststoffschutzschicht ist hochelastisch mit guter Einreissfestigkeit und zeigt eine ausgezeichnete Haftung, so dass beim Glasbruch oder dem Bersten der Flasche die Glassplitter innerhalb der Schutzschicht verbleiben. Nach der Zerstörung der Glasflasche bleibt die Flaschenform vollständig erhalten. Die auftretende kinetische Energie wird durch Streckung und Erwärmung des Kunststoffüberzuges umgesetzt.

Von besonderem Vorteil ist die Beständigkeit der Beschichtung gegenüber heissen, alkalihaltigen Spüllaugen, in denen die Flaschen vor dem Abfüllen der Getränke gereinigt werden. Dieses trifft in besonderem Masse für Mehrwegflaschen zu, die vor jedem Füllvorgang einer intensiven Reinigung unterzogen werden.

Der Vorteil der erfindungsgemässen Beschichtung liegt darin, dass auch nach wiederholtem Spülen in der heissen, alkalischen Waschlauge keine Verluste der mechanischen Kenndaten und keinerlei Haftungsverlust auftreten. Die mit einem derartigen Kunststoffüberzug versehenen Glasflaschen können ohne Bedenken als Behälter für kohlensäurehaltige Getränke verwendet werden, da keine Gefahr beim Zubruchgehen oder Zerplatzen für den Menschen mehr auftreten kann.

Bei ihrer Verwendung als Mehrwegflasche ist die Gebrauchsdauer einer beschichteten Flasche wesentlich länger als die der unbeschichteten Flasche, die infolge der Bewegungsabläufe durch Gegeneinanderreiben an scharfen Kanten und Spülvorgängen in heissen Lösungen oberflächenmässig stark beansprucht bzw. leicht beschädigt werden.

Zur Durchführung dieses Verfahrens wird die gereinigte Glasoberfläche, beispielsweise einer Glasflasche, zunächst mit einer wässrigen oder alkoholischen Silanschlichte behandelt. Für diese Behandlung werden Silane mit Resten verwendet, die zwei verschiedene Funktionen haben. Diese sind zum einen niedere Alkoxyreste, insbesondere Methoxy- und Äthoxyreste, die mit den OH-Gruppen der Glasoberfläche reagieren, und zum anderen organische Reste mit solchen funktionellen Gruppen, die mit den Isocyanatgruppen reagieren können, wie Amino-, Epoxid-, Mercaptogruppen usw., z.B.:

$\gamma$-Aminopropyltrimethoxysilan,
$\gamma$-Aminopropyltriäthoxysilan,
Glycidyloxypropyltriäthoxysilan,
Glycidyloxypropyltrimethoxysilan,
$\gamma$-Mercaptopropyltrimethoxysilan,
$\gamma$-Mercaptopropyltriäthoxysilan usw.

Die Behandlung der Glasoberflächen kann beispielsweise durch Tauchen oder Besprühen mit dem Schlichtemittel erfolgen. Die so behandelten Glasoberflächen können entweder separat bei 25 bis 100°C getrocknet werden oder die Trocknung erfolgt durch das Erwärmen der Glasoberflächen auf 80 bis 100°C, d.h. auf eine Temperatur, wie sie bei der Glasherstellung im Laufe des Abkühlprozesses auftritt.

Die Applikation der nachfolgend beschriebenen lösungsmittelfreien PUR-Zweikomponenten-Beschichtungsmassen auf die so vorbehandelten, vorgewärmten Glasoberflächen erfolgt nach bekannten Verfahren, wie Giessen, Spritzen, Tauchen u.ä. Aus Viskositätsgründen erweist sich die Erwärmung der Beschichtungsmasse auf 60-90°C als zweckmässig.

Die Wärmezufuhr kann nach der Applikation der Beschichtungsmaterialien bis zur vollständigen Rétion fortgesetzt werden, sofern die vorhandé Wärmekapazität der Glaskörper zur Härtung selbst nicht ausreichen sollte.

Die so beschichtete Glasoberfläche wird dann der eigentlichen Härtung bei einer Temperatur im Bereich von 160-240°C, vorzugsweise 180-210°C, unterworfen.

Zur Herstellung der Beschichtung eignen sich beispielsweise aliphatische und/oder cycloaliphatische Diisocyanate, wie sie beispielsweise in dem Artikel von W. Siefken in «Justus Liebigs Annalen der Chemie» *562*, Seiten 75-136, beschrieben sind, wie
Äthylendiisocyanat-1,2,
Tetramethylendiisocyanat-1,4,
Hexamethylendiisocyanat-1,6,
2,2,4- bzw. 2,4,4-Trimethylhexamethylendiisocyanat-1,6 (TMDI),
Dodecandiisocyanat-1,12,
$\omega,\omega'$-Diisocyanatodipropyläther,
Lysindiisocyanat,
Cyclobutan-1,3-diisocyanat,
Cyclohexan-1,3 und -1,4-diisocyanat,
3-Isocyanatomethyl-3,5,5-trimethylcyclohexylisocyanat,
welches auch als Isophorondiisocyanat bezeichnet und mit IPDI abgekürzt wird,
Decahydro-8-methyl-1,4-methanonaphthalen-2 (oder 3) 5-ylendimethylendiisocyanat,
Hexahydro-4,7-methanoindan-1 (oder 2) 5 (oder 6)-ylendimethylendiisocyanat,
Hexahydro-4,7-methanindan-1 (oder 2) 5 (oder 6)-ylendiisocyanat,
Hexahydrotoluylendiisocyanat,
Perhydro-2,4'- und/oder -4,4'-diphenylmethandiisocyanat
sowie beliebige Gemische der Isomeren. Weitere geeignete Isocyanate werden in dem genannten Artikel in den Annalen auf Seite 122 f. beschrieben. Selbstverständlich können auch Mischungen der Isocyanate eingesetzt werden. Es eignen sich weiter die Umsetzungsprodukte dieser Diisocyanate mit Wasser im Molverhältnis von 2: $\leq$ 1, insbesondere das in der DE-A- Nr. 2341065 beschriebene.

Die Umsetzung des Polyolgemisches mit dem Diisocyanat erfolgt in solchen Mengen, dass auf 1 OH-Gruppe 0,8-1,2, vorzugsweise 0,95-1,1 Isocyanatgruppen kommen.

Zur Herstellung. der lösungsmittelfreien PUR-Zweikomponenten-Beschichtungen eignen sich besonders Gemische trifunktioneller und bifunktioneller, hydroxylgruppenhaltiger Polyesterpolyole aus aliphatischen und/oder cycloaliphatischen Dicarbonsäuren oder deren funktionelle Derivate, wie Estern, Anhydriden, Halogeniden usw., wobei unter tri- bzw. bifunktionellen Polyesterpolyolen solche mit 3 oder 2 OH-Gruppen verstanden werden. Das Molekulargewicht der Polyesterpolyole sollte in dem angegebenen Bereich liegen.

Die Herstellung dieser Polyesterpolyole kann nach bekannten Verfahren erfolgen, in denen man Triole oder Diole mit den aliphatischen und/oder cycloaliphatischen Dicarbonsäuren oder den funktionellen Derivaten unter Erhitzen mit oder ohne Katalysator umsetzt. Geeignete Triole sind beispielsweise Glycerin, Trimethylolpropan (TMP), Trimethyloläthan, Triäthanolamin u.ä. Beispiele für geeignete Diole werden weiter unten angegeben. Anstelle der vorgenannten Triole können zur Erzielung der Trifunktionalität auch Tricarbonsäuren oder deren funktionelle Derivate eingesetzt werden.

Geeignete aliphatische Dicarbonsäuren sind die Säuren, die sich von der allgemeinen Formel:

$$HOOC - (CH_2)_n - COOH$$

ableiten lassen, in der n = 4-12 und die Wasserstoffatome der Methylengruppen teilweise durch $C_1$-$C_3$-Alkylreste substituiert sein können, wie Adipinsäure, Azelainsäure, Sebazinsäure, Dekandicarbonsäure, Dodekandicarbonsäure, 2,2,4- bzw. 2,4,4-Trimethyladipinsäure u.a.

Unter den geeigneten cycloaliphatischen Dicarbonsäuren sind auch einfach-ungesättigte zu nennen, wie
Hexahydrophthalsäure,
4-Methylhexahydrophthalsäure,
Tetrahydrophthalsäure,
4-Methyltetrahydrophthalsäure,
1,3- bzw. 1,4-Cyclohexandicarbonsäure.

Die zur Herstellung der trifunktionellen Polyesterpolyole geeigneten Triole werden weiter oben beschrieben. Die geeigneten Diole zur Herstellung der bifunktionellen Polyesterpolyole werden weiter unten genannt.

Als niedermolekulare, aliphatische und/oder cycloaliphatische Diole, die als dritte Polyolkomponente beim Verfahren gemäss der Erfindung verwendet werden, kommen solche mit einem Molekulargewicht von etwa 60 bis etwa 250, in Frage, z.B.:
Äthylenglykol,
1,2-Propylenglykol,
1,3-Propylenglykol,
Butandiol-1,3,
Butandiol-1,4,
Pentandiol-1,5,
2- bzw. 3-Methylpentandiol-1,5,
Neopentylglykol,
Hexandiol-1,6,
1,4-Cyclohexandiol,
1,4-Dimethylol-cyclohexan,
2,2-Bis-(4-hydroxycyclohexyl)-propan,
2,4,4- bzw. (2,2,4)-Trimethylhexandiol-1,6
  (TMH-diol),
Hydroxypivalinsäureneopenthylglycolester,
Diäthylenglykol,
Dipropylenglykol,
Triäthylenglykol,
Tetraäthylenglykol,
Pentaäthylenglykol
oder Gemische dieser Diole. Von diesen niedermolekularen, aliphatischen Diolen führen Hexandiol-1,6, 2,4,4- bzw. (2,2,4)-Trimethylhexandiol-1,6 und Butandiol-1,4 zu den besten Ergebnissen.

Die Dicarbonsäuren und die Polyole werden in solchen Mengen eingesetzt, in dem man das COOH:OH Verhältnis so wählt, dass die Molekulargewichte der resultierenden tri- bzw. bifunktionellen Polyesterpolyole innerhalb des angegebenen Bereichs liegen.

Das mittlere Molekulargewicht der beim Verfahren gemäss der Erfindung verwendeten Polyolgemische, bestehend aus tri- und bifunktionellen, hydroxylgruppenhaltigen Polyesterpolyolen und niedrigmolekularen, aliphatischen und/oder cycloaliphatischen Diolen, sollte zwischen 300 und 800 liegen, vorzugsweise zwischen 350 und 650. Die funktionalität der eingesetzten, vorgenannten Polyolgemische sollte zwischen 2 und 3 liegen, vorzugsweise zwischen 2,4 und 2,9.

Eine besondere Ausführungsform des vorliegenden Verfahrens besteht darin, dass man zunächst das Diisocyanat mit den niedermolekularen aliphatischen Diolen zu einem Präpolymer umsetzt und dieses dann mit dem Gemisch aus tri- und bifunktionellen, hydroxylgruppenhaltigen Polyesterpolyolen erfindungsgemäss einsetzt. Der besondere Vorteil dieser Verfahrensvariante liegt darin, dass die Beschichtungsmassen eine höhere Viskosität dadurch erhalten. Ferner wird die Ablaufgefahr der Beschichtungsmasse von der zu beschichtenden Glasoberfläche merklich herabgesetzt.

Die Umsetzung der niedermolekularen, aliphatischen und/oder cycloaliphatischen Diole, insbesondere Hexandiol-1,6, Butandiol-1,4, 2,4,4-(2,2,4)-Trimethylhexandiol-1,6 oder den anderen Diolen mit den aliphatischen und/oder cycloaliphatischen Diisocyanaten zum Präpolymer kann nach beliebigen bekannten Methoden erfolgen, wie sie beispielsweise in «High Polymers» Vol. XVI «Polyurethane; Chemistry and Technology», I: «Chemistry», von Saunders & Frisch (1962), herausgegeben von Interscience Publishers, beschrieben sind. Auf diese Weise wird ein Präpolymer in Form einer farblosen Flüssigkeit mit einem NCO-Gehalt im Bereich von etwa 15% bis etwa 30% erhalten.

Die Reaktion wird bei etwa 30 bis 100°C für eine Dauer von 3 bis 24 h unter praktisch wasserfreien Bedingungen durchgeführt. Gegebenenfalls kann die Reaktion in Gegenwart eines trockenen Inertgases, wie Stickstoff, erfolgen.

Die Reaktion zwischen Polyisocyanat einerseits und hydroxylgruppenhaltigen Polyester und/oder Diolen andererseits kann durch Katalysatoren in Gang gesetzt bzw. beschleunigt werden. Geeignet sind: metallorganische Verbindungen,
wie Zinn- und
Zinkoctoat,
Di-n-butylzinndilaurat,
Di-n-butylzinndiacetat u.a.,
und tertiäre Amine, wie
1,4-Diazobicyclooctan-[2.2.2] u.ä.,
und deren Gemische.

Zur Verbesserung der Verlaufeigenschaften der Überzüge werden bei der Zubereitung sogenannte Verlaufmittel zugesetzt. Bei diesen Mitteln kann es sich um chemische Verbindungen bzw. deren Gemische unterschiedlicher chemischer Art handeln, z.B. polymere oder monomere Verbindungen, z.B. Acetale, Äther, Mischpolymerisate, z.B. aus n-Butylacrylat und Vinylisobutyläther, Siliconharze, fluorierte Alkylester usw. Derartige Verlaufmittel können den Formulierungen in Mengen von 0,05-0,5 Gew.% bezogen auf den Gesamtansatz zugesetzt werden.

Die Beschichtungsmasse kann auch gebräuchliche Zusätze, wie in den Polyolen lösliche Farbstoffe, Stabilisatoren, Entschäumer usw. enthalten. Diese können, bezogen auf Bindemittel — Polyol, Isocyanat —, innerhalb eines weiten Bereichs schwanken. Die Menge richtet sich nach den Anforderungen an die Qualität der Überzüge.

Vor der Applikation der Beschichtungsmassen werden die Komponenten A und B innig gemischt und solange einzeln oder zusammen evakuiert, bis keine Blasen mehr aufsteigen. Falls erforderlich muss der Mischungs- und Entgasungsvorgang je nach Viskosität bei erhöhter Temperatur durchgeführt werden.

Die Schichtdicken der ausgehärteten Überzüge können je nach Beanspruchung der Glasoberflächen oder Glasflaschen zwischen 50 und 250 µm schwanken.

Gegenstand der Erfindung sind weiter die gemäss den vorstehend beschriebenen Verfahren beschichtete Gläser, insbesondere Glasflaschen.

Die in den Beispielen genannten mechanischen Kenndaten von PUR-Flaschenbeschichtungen wurden nach folgenden Methoden bestimmt:

$$\left.\begin{array}{l}\text{Zugfestigkeit}\\\text{Dehnung}\\\sigma_{100}\text{-Spannung}\end{array}\right\}\quad\text{gemäss DIN 53 455}$$

Ausserdem wurden Testfolien folgenden Stabilitätsprüfungen unterworfen:

Waschlaugentest: 4 gew.%ige NaOH,
0,4 gew.%ige Na-gluconat 1 Zyklus:
30 min/80°C
Tropentest: 70°C/100% rel. Luftfeuchtigkeit
Sterilisation: 121°C/2 h

Weiterhin wurden Haftung und Splitterschutz getestet. Der Splitterschutz wurde in einem sogenannten Falltest geprüft. Zu diesem Zweck wurde in eine beschichtete 0,7 l Getränkeflasche 6,3 g $H_2SO_4$ (98 gew.%ige) und 9 g $NaHCO_3$ gegeben und verschlossen. Die entstehende $CO_2$-Menge erzeugt bei 25°C einen Innendruck von ca. 4,0 atü. Die so vorbereitete Testflasche wurde aus einer Höhe von 1,2 m auf eine Betonplatte fallen gelassen und die Streuung der Glassplitter beobachtet.

Die erhaltenen Überzüge auf Basis von lösungsmittelfreien PUR-Zweikomponenten-Beschichtungen besitzen bei hoher Festigkeit gleichzeitig auch hohe Dehnungswerte, hohe Einreissfestigkeiten und gute Tieftemperatureigenschaften.

## Beschreibung der in den Beispielen verwendeten Ausgangssubstanzen

1. *Komponente $A_{1-4}$: (hydroxylgruppenhaltige Polyesterpolyole)*

Die Herstellung der bei den nachstehenden Versuchen eingesetzten Polyesterpolyolen und deren Charakteristika wird im folgenden beschrieben:

Die mittleren Molekulargewichte dieser Polyester können aus der analytisch bestimmten Hydroxylzahl rechnerisch ermittelt werden.

*Polyesterpolyol $A_1$:* 584 g Adipinsäure, 312 g Neopentylglykol und 236 g Hexandiol-1,6 wurden zur Veresterung gebracht. Nach Abspaltung von 8 mol Wasser wurde unter Zusatz von 0,1 Gew.% Di-n-butylzinnoxid (DBTO) die Veresterung bis zu einer Säurezahl von < 1 mg KOH/g fortgesetzt. Durch Anlegen von Vakuum bei 180°C für ca. 20-30 min wurde ein Produkt mit einem Wassergehalt von < 0,05 Gew.% und einer Hydroxylzahl von 105-111 mg KOH/g (theoretisch: 114 mg KOH/g) und einer Viskosität von ca. 3000 cPo bei 25°C erhalten.

*Polyesterpolyol $A_2$:* Entsprechend $A_1$ wurden 365 g Adipinsäure und 560 g 2,2,4- bzw. 2,4,4 Trimethylhexandiol-1,6 zur Veresterung gebracht. Hydroxylzahl 120-130 mg KOH/g, Säurezahl < 1 mg KOH/g und Viskosität bei 25°C ca. 3000 cPo.

*Polyesterpolyol $A_3$:* Entsprechend $A_1$ wurden 292 g Adipinsäure, 104 g Neopentylglykol, 118 g Hexandiol-1,6 und 134 g 1,1,1-Trimethylolpropan zur Veresterung gebracht. Hydroxylzahl: 265-285 mg KOH/g, Säurezahl < 2 mg KOH/g und Viskosität bei 25°C ca. 5000 cPo.

*Polyesterpolyol $A_4$:* Entsprechend $A_1$ wurden 219 g Adipinsäure, 240 g 2,4,4- bzw. (2,2,4)-Trimethylhexandiol-1,6 (1:1) und 134 g 1,1,1-Trimethylolpropan zur Veresterung gebracht. Hydroxylzahl: 290-305 mg KOH/g, Säurezahl < 2 mg KOH/g und Viskosität bei 25°C ca. 6500 cPo.

*Komponente $A_5$:* Aliphatisches und/oder cycloaliphatisches Diol, wie in den Beispielen angegeben.

2. *Komponente $B_{1-2}$:* (Diisocyanate)

Neben dem monomeren Isophorondiisocyanat (Härter $B_1$) wurde ein in Isophorondiisocyanat gelöstes Harnstoffaddukt, das gemäss der DT-OS Nr. 2341065 aus IPDI und Wasser hergestellt wurde, verwendet, und zwar das

*IPDI-Addukt $B_2$:* Mit einem NCO-Gehalt von 31,5 Gew.% einem Äquivalentgewicht von 133,3 und einer Viskosität bei 25°C von 450 cPo.

*Komponente $B_{3-8}$:* (isocyanatgruppenhaltige Präpolymere)

*Präpolymer $B_3$:* Zu 867,42 Gew.-T. IDPI wurden 132,48 Gew.-T. Hexandiol-1,6 und 0,1 Gew.-T. Di-n-butylzinndilaurat gegeben und anschliessend wurde 4 h bei 70-80°C unter trockenem Stickstoff gerührt. Das erhaltene Reaktionsgemisch besass einen NCO-Gehalt von 22,95%.

*Präpolymer $B_4$:* Zu 858,12 Gew.-T. IDPI wurden 141,78 Gew.-T. 2,4,4- bzw. (2,2,4)-Trimethylhexandiol-1,6 (1:1) und 0,1 Gew.-T. Di-n-butylzinndilaurat gegeben und anschliessend wurde 4 h bei 70-80°C unter trockenem Stickstoff gerührt. Das erhaltene Reaktionsgemisch besass einen NCO-Gehalt von 24,56%.

*Präpolymer $B_5$:* Zu 865,35 Gew.-T. IPDI wurden 134,55 Gew.-T. Butandiol-1,4 und 0,1 Gew.-

T. Di-n-butylzinndilaurat gegeben und anschliessend wurde 4 h bei 70-80°C unter trockenem Stickstoff gerührt. Das erhaltene Reaktionsgemisch besass einen NCO-Gehalt von 19,81%.

*Präpolymer B₆:* Zu 850,21 Gew.T. IPDI wurden 149,69 Gew.-T. Hexandiol-1,6 und 0,1 Gew.-T. Di-n-butylzinndilaurat gegeben und anschliessend wurde 4 h unter trockenem Stickstoff bei 70-80°C gerührt. Das erhaltene Reaktionsgemisch besass einen NCO-Gehalt von 21,21%.

*Präpolymer B₇:* Zu 838,23 Gew.-T. IPDI wurden 161,76 Gew.-T. TMH-diol und 0,1 Gew.-T. Di-n-butylzinndilaurat gegeben und anschliessend wurde 4 h bei 70-80°C unter trockenem Stickstoff gerührt. Das erhaltene Reaktionsgemisch besass einen NCO-Gehalt von 22,83%.

*Präpolymer B₈:* Zu 862,1 Gew.-T. IPDI wurden 137,8 Gew.-T. Butandiol-1,4 und 0,1 Gew.-T. Di-n-butylzinndilaurat gegeben und anschliessend wurde 4 h bei 70-80°C unter trockenem Stickstoff gerührt. Das erhaltene Reaktionsgemisch besass einen NCO-Gehalt von 19,53%.

**Beschichtungsmassen**

In jedem der nachstehenden Beispiele wurde zunächst die Komponente A, bestehend aus dem tri- und bifunktionellen Polyesterpolyol und gegebenenfalls aliphatischen und/oder cycloaliphatischen Diol sowie Katalysator und Verlaufmittel bei 40 bis 50°C am Dissolver homogeniesiert und anschliessend so lange evakuiert, bis keine Blasen mehr aufstiegen. Danach wurde die Komponente B – der Härter oder das Präpolymer – zugesetzt, gemischt und wiederum bis zur Blasenfreiheit evakuiert. Appliziert wurde das Beschichtungsmaterial zunächst auf unbehandelte, auf 80-100°C vorgewärmte Glasplatten, um Folien zur. Ermittlung der mechanischen Kenndaten und für die Stabilitätsprüfungen, wie Waschlaugen- und Tropentest sowie Sterilisation, herzustellen. Für Haftungsversuche und Falltest wurden mit Silanschlichte (Glycidyloxypropyltrimethoxysilan) vorbehandelte, auf 80-100°C vorgewärmte Glasplatten und -flaschen beschichtet.

Tabelle 1 zeigt Beispiele mechanischer Kenndaten von Polyolkombinationen A₁ + A₃ sowie bestimmten Diolen in Verbindung mit IPDI und IPDI-Add. B₂ bzw. IPDI-Präpolymeren B₆₋₈ entsprechend vorstehender Beschreibung. Das OH/NCO-Verhältnis betrug 1:1.

*Tabelle 1*

| Beispiele | 1 | 2 | 3 | 4 | 5 | 6 | 7 | 8 |
|---|---|---|---|---|---|---|---|---|
| *Komponente A* | | | | | | | | |
| Polyesterpolyol A₃ | 400,87 | 343,23 | 381,48 | 379,62 | 393,96 | 391,5 | 367,8 | 366,13 |
| Polyesterpolyol A₁ | 267,24 | 343,23 | 190,74 | 189,81 | 196,98 | 195,75 | 183,9 | 183,06 |
| Hexandiol-1,6 | — | — | 63,58 | — | — | — | — | — |
| TMH-diol | — | — | — | — | 65,66 | — | — | — |
| Butandiol-1,4 | — | — | — | — | — | — | 61,3 | — |
| Handelsübliches Verlaufmittel auf Basis von Alkylestern perfluorierter Carbonsäuren | 0,5 | 0,5 | 1,0 | 2,0 | 1,0 | 2,0 | 1,0 | 2,0 |
| Di-n-butylzinndilaurat | 1,0 | 1,0 | 2,0 | 0,5 | 2,0 | 0,5 | 2,0 | 0,5 |
| *Komponente B* | | | | | | | | |
| IPDI | — | — | 361,20 | — | 340,40 | — | 384,0 | — |
| IPDI-Addukt B₂ | 329,89 | 311,54 | — | — | — | — | — | — |
| Präpolymer B₆ | — | — | — | 428,07 | — | — | — | — |
| Präpolymer B₇ | — | — | — | — | — | 410,25 | — | — |
| Präpolymer B₈ | — | — | — | — | — | — | — | 448,31 |
| *Mechanische Kenndaten* | | | | | | | | |
| Zugfestigkeit (N/mm²) | 36,0 | 31,6 | 37,8 | 36,7 | 36,4 | 37,1 | 36,8 | 36,5 |
| Dehnung (%) | 180 | 200 | 195 | 190 | 200 | 195 | 190 | 195 |

Die Ergebnisse der Stabilitätsprüfungen, wie Wachschlaugen-, Tropen- und Sterilisationstest sind in Tabelle 3 zusammengefasst. Die Haftung der Beschichtungsmassen auf vorbehandelten Glasplatten und Flaschen (auch nach ·5 Zyklen Waschlaugentest) war ausgezeichnet. Der Splitterschutz war in allen Beispielen gewährleistet.

*Tabelle 2* zeigt einige weitere Beispiele mit mechanischen Kenndaten der Polyolkombinationen bestehend aus Polyesterpolyol A₂ und A₄ und gegebenenfalls Hexandiol-1,6, TMH-diol und Butandiol-1,4 in Verbindung mit IPDI, IPDI-Addukt B₂ oder Präpolymeren B₃₋₅. Das OH/NCO-Verhältnis lag ebenfalls bei 1:1.

*Tabelle 2*

| Beispiele | 9 | 10 | 11 | 12 | 13 | 14 | 15 | 16 | 17 | 18 | 19 | 20 |
|---|---|---|---|---|---|---|---|---|---|---|---|---|
| *Komponente A* | | | | | | | | | | | | |
| Polyester $A_4$ | 422,4 | 426,69 | 369,89 | 343,62 | 435,43 | 431,49 | 478,33 | 381,55 | 355,74 | 356,99 | 303,83 | 301,14 |
| Polyester $A_2$ | 120,69 | 121,91 | 184,95 | 171,81 | 124,41 | 123,28 | 127,55 | 190,78 | 177,87 | 178,49 | 243,06 | 240,92 |
| Hexandiol-1,6 | 60,34 | — | 61,65 | 57,27 | — | — | — | 63,59 | 59,29 | — | — | — |
| TMH-diol | — | — | — | — | 62,20 | — | 31,89 | — | — | 59,5 | 60,77 | — |
| Butandiol-1,4 | — | — | — | — | — | — | — | — | — | — | — | — |
| Handelsübliches Verlaufmittel auf Basis von Alkylestern perfluorierter Carbonsäuren | 0,5 | 0,5 | 0,5 | 0,5 | 0,5 | 0,5 | 0,5 | 0,5 | 0,5 | 0,5 | 0,5 | 0,5 |
| Di-n-butylzinndilaurat | 1,0 | 2,0 | 1,0 | 1,0 | 1,0 | 2,0 | 1,0 | 1,0 | 1,0 | 1,0 | 1,0 | 2,0 |
| *Komponente B* | | | | | | | | | | | | |
| IPDI | 395,07 | — | 382,01 | — | 376,46 | — | 360,73 | 362,58 | — | 403,52 | 390,84 | — |
| IPDI-Addukt $B_2$ | — | — | — | 425,80 | — | — | — | — | 405,60 | — | — | — |
| Präpolymer $B_3$ | — | 448,9 | — | — | — | — | — | — | — | — | — | — |
| Präpolymer $B_4$ | — | — | — | — | — | 442,73 | — | — | — | — | — | — |
| Präpolymer $B_5$ | — | — | — | — | — | — | — | — | — | — | — | 455,44 |
| *Mechanische Kenndaten* | | | | | | | | | | | | |
| Zugfestigkeit (N/mm$^2$) | 39,1 | 38,5 | 41,8 | 38,9 | 38,3 | 38,9 | 39,7 | 39,2 | 40,1 | 37,8 | 41,7 | 40,3 |
| Dehnung (%) | 155 | 160 | 220 | 170 | 170 | 180 | 175 | 205 | 185 | 175 | 195 | 190 |

Die Ergebnisse der Stabilitätsprüfungen sind ebenfalls in Tabelle 3 zusammengefasst. Die Haftung der Beschichtungsmassen auf vorbehandelten Glasplatten oder Flaschen (auch nach 5 Zyklen Waschlaugentest) war ebenfalls ausgezeichnet.

Der Splitterschutz war in allen Beispielen gewährleistet. Tabelle 3 zeigt die Waschlaugen-, Tropen- und Sterilisationsbeständigkeit ausgewählter Beispiele aus den Tabellen 1 und 2.

*Tabelle 3*

| Beispiele aus Tabellen 1 und 2 | | | 1 | 2 | 3 | 5 | 7 | 11 | 16 | 19 |
|---|---|---|---|---|---|---|---|---|---|---|
| *Waschlaugentest* | | | | | | | | | | |
| Vor dem Test | Zugfestigkeit $\sigma_B$ | N/mm² | 34,7 | 30,1 | 37,4 | 34,5 | 38,4 | 40,7 | 39,7 | 40,6 |
| | Dehnung $\varepsilon_B$ | % | 185 | 205 | 192 | 195 | 190 | 215 | 195 | 195 |
| | $\sigma_{100}$-Spannung $\sigma_{100}$ | N/mm² | 14,1 | 10,5 | 13,3 | 12,3 | 21,4 | 19,4 | 18,8 | 20,0 |
| Nach dem Test | $\sigma_B$ n. 5. Zyklus | N/mm² | 19,4 | 17,1 | 28,6 | 24,2 | 25,6 | 27,5 | 28,1 | 29,1 |
| | $\sigma_B$ u. n. 24 h bei RT* | N/mm² | 25,1 | 22,7 | 42,3 | 28,3 | 38,9 | 36,9 | 35,3 | 36,7 |
| | $\varepsilon_B$ n. 5. Zyklus | % | 210 | 225 | 200 | 200 | 170 | 205 | 200 | 225 |
| | $\varepsilon_B$ u. n. 24 h bei RT* | % | 190 | 200 | 206 | 175 | 190 | 195 | 185 | 190 |
| | $\sigma_{100}$ n. 5. Zyklus | N/mm² | 7,3 | 5,8 | 8,3 | 8,1 | 12,4 | 11,9 | 14,4 | 15,7 |
| | $\sigma_{100}$ u. n. 24 h bei RT* | N/mm² | 13,1 | 9,9 | 12,4 | 10,5 | 20,1 | 18,7 | 17,6 | 18,1 |
| *Tropentest* | | | | | | | | | | |
| Vor dem Test | Zugfestigkeit $\sigma_B$ | N/mm² | 33,5 | 29,7 | 40,4 | 36,3 | 35,9 | 39,8 | 38,7 | 41,0 |
| | Dehnung $\varepsilon_B$ | % | 175 | 210 | 199 | 190 | 185 | 220 | 215 | 195 |
| | $\sigma_{100}$-Spannung $\sigma_{100}$ | N/mm² | 17,0 | 13,8 | 13,4 | 12,7 | 21 | 18,9 | 17,3 | 19,7 |
| Nach dem Test | $\sigma_B$ n. 1. d + 24 h bei RT | N/mm² | 29,1 | 26,7 | 35,7 | 25,8 | 30,2 | 34,8 | 35,5 | 36,5 |
| | $\varepsilon_B$ n. 1. d + 24 h bei RT | % | 180 | 220 | 215 | 185 | 175 | 205 | 200 | 200 |
| | $\sigma_{100}$ n. 1. d + 24 h bei RT | N/mm² | 14,3 | 11,9 | 11,7 | 9,8 | 16,6 | 17,1 | 16,4 | 18,1 |
| | $\sigma_B$ n. 7. d + 24 h bei RT | N/mm² | 30,0 | 27,1 | 39,8 | 35,3 | 33,3 | 35,1 | 35,9 | 34,5 |
| | $\varepsilon_B$ n. 7. d + 24 h bei RT | % | 200 | 235 | 176 | 220 | 180 | 200 | 190 | 190 |
| | $\sigma_{100}$ n. 7. d + 24 h bei RT | N/mm² | 13,8 | 10,7 | 17,2 | 14,7 | 22,1 | 18,5 | 16,1 | 18,7 |
| | $\sigma_B$ n. 14. d + 24 h bei RT | N/mm² | 29,8 | 24,3 | 35,6 | 28,4 | 30,9 | 31,7 | 33,9 | 32,6 |
| | $\varepsilon_B$ n. 14. d + 24 h bei RT | % | 175 | 200 | 188 | 185 | 165 | 195 | 185 | 180 |
| | $\sigma_{100}$ n. 14. d + 24 h bei RT | N/mm² | 12,9 | 9,9 | 15,9 | 12,3 | 20,4 | 17,7 | 16,5 | 16,7 |
| *Sterilisation* Gewichtszunahme | | % | 2,7 | 2,9 | 2,1 | 2,3 | 2,0 | 2,4 | 2,3 | 2,4 |

* RT = Raumtemperatur

## Vergleichsbeispiel 1

Herstellung und Anwendung entsprechend den vorstehend beschriebenen Beispielen.

*Komponente A:*

384,87 Gew.-T. Polyätherpolyol (OH-Z: 108 mg KOH/g) linear
102,68 Gew.-T. Polyätherpolyol (OH-Z: 258 mg KOH/g) linear
102,00 Gew.-T. Trimethylolpropan
  2,00 Gew.-T. Sn-octoat
  1,00 Gew.-T. handelsübliches Verlaufmittel auf Basis von Alkylestern perfluorierter Carbonsäure

*Komponente B:*

407,45 Gew.-T. IPDI

*Mechanische Eigenschaften:*
Zugfestigkeit: 18,0 N/mm²
Dehnung:    10%

Kein Splitterschutz gewährleistet, da sowohl die Dehnung als auch die Zugfestigkeit mangelhaft sind.

## Vergleichsbeispiel 2

Herstellung und Anwendung der Beschichtungsmasse wie vorstehend beschrieben.

*Komponente A:*

225,12 Gew.-T. Polytetramethylenätherglykol (OH-Z: 173,5 mg KOH/g)
262,43 Gew.-T. Polytetramethylenätherglykol (OH-Z: 110,5 mg KOH/g)
102,0  Gew.-T. Trimethylolpropan
  2,0  Gew.-T. Sn-octoat
  1,0  Gew.-T. Verlaufmittel analog Vergleichsbeispiel 1

*Komponente B:*

407,45 Gew.-T. IPDI

*Mechanische Eigenschaften:*
Zugfestigkeit: 35 N/mm²
Dehnung:    160%

Im Falltest wurden geringfügig streuende Glassplitter beobachtet. Ausserdem zeigten die Folien nach dem Härtungsprozess eine deutliche Gelbfärbung und nach 400 h Kurzbewitterung im Xenotets (DIN 53231) trat bereits Versprödung auf und nach 650 h Zerstörung der Folie.

## Patentansprüche

1. Verfahren zum Beschichten von Glasoberflächen, insbesondere Glasflaschen, zur Verhinderung der Streuung von Glaspartikeln beim Bersten, mit einer transparenten, duroplastischen Schutzchicht von mehr als 50 μm durch Auftragen von Massen aus Polyisocyanaten und hydroxylgruppenhaltigen Verbindungen sowie üblicher Verarbeitungszusätze und Aushärten des Überzuges bei erhöhten Temperaturen, wobei man zunächst die reine Glasoberfläche mit einer wässrigen oder alkoholischen Silanschlichte behandelt und trocknet, dadurch gekennzeichnet, dass man anschliessend die so behandelte Glasoberfläche mit einer Masse aus

a) aliphatischen und/oder cycloaliphatischen Diisocyanaten oder deren Umsetzungsprodukte mit Wasser im Molverhältnis von 2: ≦ 1 (Komponente B) und einem Gemisch hydroxylgruppenhaltiger Verbindungen bestehend aus 40-80 Gew.%, vorzugsweise 50-75 Gew.%, trifunktioneller, hydroxylgruppenhaltiger Polyesterpolyole aus aliphatischen und/oder cycloaliphatischen Dicarbonsäuren bzw. Tricarbonsäuren und einem Gemisch aus Triolen und Diolen mit einem mittleren Molekulargewicht von 300 bis 1400; 15-50 Gew.%, vorzugsweise 20-40 Gew.%, bifunktioneller, hydroxylgruppenhaltiger Polyesterpolyole aus aliphatischen und/oder cycloaliphatischen Dicarbonsäuren und Diolen mit einem mittleren Molekulargewicht von 400 bis 2000, und gegebenenfalls; 2,5-25 Gew.%, vorzugsweise 5-15 Gew.% aliphatischer und/oder cycloaliphatischer Diole (Komponente A), oder aus

b) einem Präpolymer aus aliphatischen und/oder cycloaliphatischen Diisocyanaten und 2,5-25 Gew.%, vorzugsweise 5-15 Gew.%, niedermolekularen aliphatischen Diolen (Komponente B) und einem Gemisch hydroxylgruppenhaltiger Polyesterpolyole bestehend aus 40-80 Gew.%, vorzugsweise 50-75 Gew.%, trifunktioneller, hydroxylgruppenhaltiger Polyesterpolyole aus aliphatischen und/oder cycloaliphatischen Dicarbonsäuren bzw. Tricarbonsäuren und einem Gemisch aus Triolen und Diolen mit einem mittleren Molekulargewicht von 300 bis 1400; 15-50 Gew.%, vorzugsweise 20-40 Gew.%, bifunktioneller, hydroxylgruppenhaltiger Polyesterpolyole aus aliphatischen und/oder cycloaliphatischen Dicarbonsäuren und Diolen mit einem mittleren Molekulargewicht von 400 bis 2000 (Komponente A), beschichtet und härtet, gegebenenfalls unter weiterer Wärmezufuhr, wobei die Prozentsätze jeweils bezogen sind auf die Gesamtwenge der Polyole.

2. Verfahren nach Anspruch 1, dadurch gekennzeichnet, dass das trifunktionelle, hydroxylgruppenhaltige Polyesterpolyol ein mittleres Molekulargewicht von 500 bis 800 hat.

3. Verfahren nach einem der beiden Ansprüchen 1 oder 2, dadurch gekennzeichnet, dass das bifunktionelle, hydroxylgruppenhaltige Polyesterpolyol ein mittleres Molekulargewicht von 500 bis 1200 hat.

4. Verfahren nach den Ansprüchen 1 bis 3, dadurch gekennzeichnet, dass man Polyesterpolyole und Diole sowie Polyisocyanate in solchen Mengen einsetzt, dass auf eine OH-Gruppe 0,8-1,2 Isocyanatgruppen kommen.

5. Verfahren nach Anspruch 4, dadurch gekennzeichnet, dass auf eine OH-Gruppe 0,95-1,1 Isocyanatgruppen kommen.

6. Verfahren nach den Ansprüchen 1 bis 5, dadurch gekennzeichnet, dass man die beschichten Glasoberflächen bei einer Temperatur im Bereich von 150-240°C der Härtung unterwirft.

7. Verfahren nach Anspruch 6, dadurch gekennzeichnet, dass man die Härtung bei Temperaturen im Bereich von 180-210°C durchführt.

## Claims

1. A process for the coating of glass surfaces, especially glass bottles, in order to prevent the scattering of glass particles upon bursting, with a transparent, duroplastic protective coat of more than 50 μm by depositing a substance of polyisocyanates and hydroxy-group-containing compounds as well as the usual processing additives and hardening of the overlay at increased temperatures, wherein at first the clean glass surface is treated with an aqueous or alcoholic silane skim coat and dried, comprising the so treated surface then coated with a substance of:

a) aliphatic and/or cycloaliphatic diisocyanates or their reaction products with water in the mole ratio of 2: ≦ 1 (component B) and a mixture of hydroxy-group-containing compounds consisting of: 40-80 weight-%, preferably 50-75 weight-%, trifunctional, hydroxy-group-containing polyester polyols from aliphatic and/or cycloaliphatic dicarboxylic acids respectively tricarboxylic acids and a mixture of triols and diols with an average molecular weight of 300 to 1400; 15-50 weight-%,referably 20-40 weight-%, bifunctional, hydroxy-group-containing polyester polyols from aliphatic and/or cycloaliphatic dicarboxylic acids and diols with an average molecular weight of 400 to 2000 and, if necessary; 2,5-25 weight-%, preferably 5-15 weight-%, aliphatic and/or cycloaliphatic diols (component A), or of:

b) a prepolymer from aliphatic and/or cycloaliphatic diisocyanates and 2,5-25 weight-%, preferably 5-15 weight-%, lower molecular aliphatic diols (component B) and a mixture of hydroxy-group-containing polyester polyols consisting of: 40-80 weight-%, preferably 50-75 weight-%, trifunctional, hydroxy-group-containing polyester polyols from aliphatic and/or cycloaliphatic dicarboxylic acids respectively tricarboxylic acids and a mixture of triols and diols with an average molecular weight of 300 to 1400; 15-50 weight-%, preferably 20-40 weight-%, bifunctional, hydroxy-group-containing polyester polyols from aliphatic and/or cycloaliphatic dicarboxylic acids and diols with an average molecular weight of 400 to 2000 (component A), and hardened, if necessary, with additional heat, whereby the percentages being related to the total amount of polyols.

2. A process according to Claim 1, wherein the trifunctional, hydroxy-group-containing polyester polyol has an average molecular weight of 500 to 800.

3. A process according to Claims 1 or 2, wherein the bifunctional, hydroxy-group-containing polyester polyol has an average molecular weight of 500 to 1200.

4. A process according to Claims 1-3, wherein polyester polyols and diols as well as polyisocyanates are reacted in such amounts that 0,8 to 1,2 isocyanate groups react with one OH-group.

5. A process according to Claim 4, wherein 0,95-1,1 isocyanate groups react with one OH-group.

6. A process according to Claims 1-5, wherein said coated glass surfaces are subjected to hardening at a temperature in the range of 150-240°C.

7. A process according to Claim 6, wherein the hardening is carried out at temperatures in the range of 180-210°C.

## Revendications

1. Procédé d'enduction de surfaces de verre, en particulier de bouteilles de verre pour empêcher l'éparpillement de particules de verre en cas d'éclatement, à l'aide d'une couche protectrice duroplastique transparente de plus de 50 μm par l'application de masses de polyisocyanates et de composés contenant des groupes hydroxyle de même que d'additifs usuels de travail et par le durcissement complet de l'enduit à des températures élevées, en traitant tout d'abord la surface de verre propre avec une colle silanique aqueuse ou alcoolique et en séchant, caractérisé en ce qu'on enduit ensuite la surface de verre ainsi traitée avec une masse

a) de diisocyanates aliphatiques et/ou cycloaliphatiques ou de leurs produits de réaction avec l'eau dans le rapport molaire de 2: ≦ 1 (composant B) et d'un mélange de composés contenant des groupes hydroxyle consistant en 40-80% en poids, de préférence 50-75% en poids de polyesterpolyols trifonctionnels contenant des groupes hydroxyle dérivant d'acides dicarboxyliques ou d'acides tricarboxyliques aliphatiques et/ou cycloaliphatiques et d'un mélange de triols et de diols ayant un poids moléculaire moyen de 300 à 1400; 15-50% en poids, de préférence 20-40% en poids de polyesterpolyols bifonctionnels contenant des groupes hydroxyle dérivant d'acides dicarboxyliques aliphatiques et/ou cycloaliphatiques et de diols ayant un poids moléculaire moyen de 400 à 2000, et éventuellement 2,5-25% en poids, de préférence 5-15% en poids de diols aliphatiques et/ou cycloaliphatiques (composant A), ou de

b) un prépolymère de diisocyanates aliphatiques et/ou cycloaliphatiques et de 2,5-25% en poids, de préférence 5-15% en poids de diols aliphatiques inférieurs (composant B) et d'un mélange de polyesterpolyols contenant des groupes hydroxyle consistant en 40-80% en poids, de préférence 50-75% en poids de polyesterpolyols trifonctionnels contenant des groupes hydroxyle dérivant d'acides dicarboxyliques ou d'acides tricarboxyliques aliphatiques et/ou cycloaliphatiques et d'un mélange de triols et de diols ayant un poids moléculaire moyen de 300 à 1400; 15-50% en poids, de préférence 20-40% en poids de polyesterpolyols bifonctionnels contenant des groupes hydroxyle dérivant d'acides dicarboxyliques aliphatiques et/ou cycloaliphatiques et de diols ayant un poids moléculaire moyen de 400 à 2000 (composant A), et en ce qu'on durcit, éventuellement avec un apport supplémentaire de chaleur, les pourcentages se rapportant chaque fois à la quantité totale des polyols.

2. Procédé selon la revendication 1, caractérisé en ce que le polyesterpolyol trifonctionnel contenant des groupes hydroxyle a un poids moléculaire moyen de 500 à 800.

3. Procédé selon la revendication 1 ou 2, caractérisé en ce que le polyesterpolyol bifonctionnel contenant des groupes hydroxyle a un poids moléculaire moyen de 500 à 1200.

4. Procédé selon les revendications 1 à 3, caractérisé en ce qu'on utilise les polyesterpolyols et les diols ainsi que les polyisocyanates en des quantités telles que, par groupe OH, il y ait 0,8-1,2 groupe isocyanate.

5. Procédé selon la revendication 4, caractérisé en ce que, par groupe OH, il y a 0,95-1,1 groupe isocyanate.

6. Procédé selon les revendications 1 à 5, caractérisé en ce qu'on soumet au durcissement les surfaces de verre enduites à une température dans l'intervalle de 150-240°C.

7. Procédé selon la revendication 6, caractérisé en ce qu'on effectue le durcissement à des températures dans l'intervalle de 180 à 210°C.